# EUROPÄISCHE PATENTANMELDUNG

(11) **EP 1 635 233 A1**
(43) Veröffentlichungstag der Anmeldung: **15.03.2006**
(21) Anmeldenummer: 04021277.1
(22) Anmeldetag: 08.09.2004
(51) Int. Cl.: G04G 9/00, G04B 19/00

(54) **Dynamische Anzeige numerischer Werte korrelierender Einheiten und darauf bezogener Informationen**

(71) Anmelder: Städtler, Marc-Michael, 83088 Kiefersfelden (DE)
(72) Erfinder: Städtler, Marc-Michael, 83088 Kiefersfelden (DE)

(57) **Zusammenfassung**

Die Erfindung betrifft die dynamische Anzeige quantitativer Werte korrelierender Einheiten und darauf bezogene Informationen zur platzsparenden Darstellung in Bauteilen die mobiler Art sein können wie beispielsweise die am Handgelenk getragene zeitdarstellende Armbanduhr als auch nicht mobiler Art wie beispielsweise fest eingebaute Maschinen. Die Aufgabe der Erfindung besteht darin, eine dynamische Anzeige quantitativer Werte korrelierender Einheiten und darauf bezogene Informationen zu entwickeln, die sowohl eine jederzeitig exakte als auch intuitiv wahrnehmbare als auch in direkter räumlicher Nähe zueinander und damit "auf einen Blick" ablesbare Ergebnisdarstellung mehrerer Einheiten und darauf bezogene Informationen mit zugleich raumsparender Wirkung dadurch ermöglicht, dass bei einer Gruppierung von zumindest zwei korrelierenden Einheiten das jeweilige Ergebnis exakt und dynamisch angezeigt wird, indem der jeweilige ergebnisbestimmende Wert (1) einer Einheit mittels der bekannten Möglichkeiten zur elektronisch bzw. mechanisch gesteuerten Darstellung von Ziffern bzw. Buchstaben bzw. logischen Symbolen regelmäßig in jeweils dem Sichtfenster (2) numerisch exakt angezeigt wird das auf Grund seiner numerisch bestimmten und als solchen wahrnehmbaren Position (3) innerhalb einer hierarchischen Anordnung von einer, durch die möglichen Ergebniswerte der zweiten anzuzeigenden Einheit bestimmten, gleichbleibenden und jederzeit wahrnehmbaren Anzahl von Sichtfenstern (4) den jeweils ergebnisbestimmenden Zahlenwert der zweiten Einheit repräsentiert.

## Beschreibung

Die Erfmdung betrifft die dynamische Anzeige quantitativer Werte korrelierender Einheiten und darauf bezogene Informationen zur platzsparenden Darstellung in Bauteilen gemäß dem Oberbegriff des Anspruchs 1.

Nach der vorliegenden Erfindung sind "Anzeigen quantitativer Werte" alle die Vorrichtungen die quantitativ bestimmbare Messwerte anzeigen und "korrelierende Einheiten" alle die Einheiten, die in einem kausalen Zusammenhang zueinander sowie "darauf bezogene Informationen" alle die Informationen die in einem kausalen Zusammenhang zu den angezeigten Messwerten dargestellt werden. Mit "Bauteilen" sind alle die Umhausungen gemeint, in denen Anzeigen dieser Art eingebaut werden, wie beispielsweise die Zeitanzeige in das Gehäuse einer Armbanduhr bzw. die Füllstandsanzeige in das, das Füllgut aufnehmende Behältnis. Die Bauteile in denen die Anzeigen zum Einsatz kommen, können sowohl mobiler Art sein wie beispielsweise die am Handgelenk getragene zeitdarstellende Armbanduhr als auch nicht mobiler Art wie beispielsweise fest eingebaute Maschinen. Das Ablesen der Ergebnisanzeige erfolgt üblicherweise durch transparente "Sichtfenster" in den Umhausungen die die Anzeige gegen mechanische Beschädigung schützen, wie beispielsweise die Glasabdeckung bei einer Armbanduhr.

Anzeigen der genannten Art erfolgen üblicherweise mittels analoger bzw. digitaler Darstellung der Ergebniswerte bzw. einer Kombination daraus. Die größten Anstrengungen zur Entwicklung von Anzeigen korrelierender Einheiten erfolgen im Bereich der Zeitanzeige. Die Beschreibung des Standes der Technik bezieht sich daher insbesondere auch auf diese Anzeigen, ohne jedoch die vorliegende Erfmdung auf die Zeitanzeige zu beschränken.

Unter "dynamischer Anzeige" sind in der vorliegenden Erfindung alle die Anzeigen gemeint, die die Ergebniswerte einer oder mehrerer Einheiten durch eine ergebnisabhängige Lageveränderung innerhalb einer sichtbaren logischen Anordnung möglicher Ergebniswerte darstellen. Die sichtbar dargestellten möglichen Ergebniswerte werden im weiteren als "Skala" bezeichnet. Dynamische Anzeigen der genannten Art ermöglichen auch ohne exakte Angabe bzw. exaktes Ablesen von Zahlenwerten eine Ergebnisauswertung "auf einen Blick" allein aufgrund der ergebnisabhängigen Lage des Anzeigeelementes auf der Skala. Diese Eigenschaft wird in der vorliegenden Erfmdung mit "intuitive" Ergebniswahrnehmung bezeichnet. So ist beispielsweise bei einer analogen Anzeige der Füllstand eines Behältnisses durch den ergebnisabhängigen Stand des Anzeigeelementes auf der Skala mit "voll" bzw. "halbvoll" bzw. "leer" auch dann ablesbar, wenn die anzeigende Einheit, beispielsweise "Liter" oder "Gallone" bzw. das Gesamtfassungsvermögen des Behältnisses dem Ablesenden nicht bekannt ist bzw. wenn Symbole zur Darstellung der Ergebniswerte nicht vorhanden sind bzw. die verwendeten Symbole dem Ablesenden nicht bekannt sind.

Analoge Anzeigen sind entsprechend der vorbeschriebenen Definition zugleich dynamische Anzeigen. Die Darstellung der möglichen Ergebniswerte auf der Skala analoger Anzeigen ist üblicherweise so geometrisch angeordnet, dass der letztmögliche Ergebniswert in direkter räumlicher Nähe zum erstmöglichen Ergebniswert dargestellt wird um somit ein unterbrechungsfreies Anzeigen sich regelmäßig wiederholender auf einander aufbauender Ergebniswerte zu ermöglichen wie dies beispielsweise von zeitanzeigenden Armbanduhren bekannt ist, die eine kreisrunde, bzw. recht- oder vieleckige Skala aufweisen. Weiterhin bekannt sind linear analoge Anzeigen bei denen die möglichen Ergebniswerte mit einem räumlich getrennten Anfangs- und Endpunkt auf der Skala dargestellt sind, so dass bei der Darstellung sich regelmäßig wiederholender auf einander aufbauender Ergebniswerte das Anzeigeelement nach Erreichen des letzt möglichen Ergebniswerts zum sich dann wiederholenden, am Anfangspunkt der Skala dargestellten erstmöglichen Ergebniswert zurückspringt. Die ergebnisbestimmenden Werte analoger Anzeigen werden üblicherweise mittels eines Zeigerelements angegeben, wie dies beispielsweise von mechanisch betriebenen Analoguhren bekannt ist, bzw. durch optische Kenntlichmachung des jeweiligen ergebnisbestimmenden Wertes, wie dies beispielsweise aus der Gebrauchsmusterschrift DE 201 05 780 U 1 bekannt ist.

Die Genauigkeit der analogen Anzeige resultiert aus dem Detaillierungsgrad der erkennbar angegebenen möglichen Ergebniswerten der jeweiligen Einheit auf der Skala, die üblicherweise durch eine Strichkennung und/oder der Anordnung logisch aufeinanderfolgender Symbole, wie beispielsweise numerische Ziffern dargestellt wird, sowie ggf. aus der Anzahl der jeweils durch eigenständige Anzeigeelemente repräsentierten additiven Einheiten, wie beispielsweise für die Sekunde, Minute und Stunde bei der Anzeige der Tageszeit. Der Platzbedarf analoger Anzeigen ist daher umso größer, je detaillierter und damit je genauer die möglichen Ergebniswerte auf der Skala dargestellt werden.

Bei der Ergebnisanzeige von einander additiv abhängiger Einheiten mittels Zeigerelementen legen diese auf ihrer Bewegungsbahn innerhalb der sichtbaren Skala jeweils die Länge zurücklegt, die dem jeweiligen Anteil der nächst niedrigeren Einheit an dieser Bewegungsbahn direkt proportional entspricht. Bei einer Zeitdarstellung wird beispielsweise der Wert der Einheit "Minute" durch den Zeiger der Einheit "Stunde" im verkleinerten Maßstab dadurch angezeigt, dass der Weg den der Stundenzeiger innerhalb der Zeitspanne "1 Stunde" zurücklegt exakt "60 Minuten" entspricht. Der Zahlenwert der Einheit "Minute" ist damit auch ohne gesonderten Minutenzeiger durch den Zeiger der Stunde im verkleinerten Maßstab und damit zumindest abschätzbar dargestellt.

Der Anwendungsvorteil der analogen Anzeigen bei nur einer angezeigten Einheit besteht in der jederzeitigen, relativ zum dargestellten Detaillierungsgrad exakten und zugleich intuitiv wahrnehmbaren Ergebnisdarstellung. Bei der gleichzeitigen Anzeige mehrerer Einheiten wird bei analogen Anzeigen die Eindeutigkeit der Ergebnisdarstellung durch die Abbildung der einzelnen Einheiten durch jeweils gesonderte Anzeigeelemente erreicht. Auf Grund der sich ergebnisabhängig einstellenden räumlichen Distanz der Anzeigeelemente bei schon zwei anzuzeigenden Einheiten ist die zeitgleiche exakte und intuitive Erfassung der Ergebniswerte der angezeigten Einheiten "auf einen Blick" dann nicht mehr gegeben, dies auch dann nicht wenn die möglichen Ergebniswerte auf der Skala numerisch exakt angeben sind. Beispielsweise stehen bei einer, auf einer kreisrunden Skala angezeigten Uhrzeit "10:22" die Anzeigeelemente der Stunde und der Minute diametral gegenüber und damit in solcher räumlichen Distanz zueinander, dass die ggf. exakt auf der Skala ablesbaren Zahlenwerte dennoch nicht zeitgleich exakt abgelesen werden können. Der gleiche Effekt tritt ergebnisabhängig bei einer linear analogen Anordnung auf. Aus diesem Grunde erfolgt bei einer Vielzahl anzuzeigender Einheiten die Darstellung der Ergebniswerte üblicherweise in gesonderten analogen Anzeigen, die jedoch in räumlicher Nähe zueinander gruppiert sein können, wie dies beispielsweise von der analogen Armbanduhren bekannt ist, bei denen die Datums-, Mondphasen- und Tageszeitanzeige in jeweils eigenständigen Anzeigen innerhalb eines Gehäuses dargestellt werden.

Bei der Ergebnisanzeige mittels optischer Kenntlichmachung des Ergebniswertes ohne Zeigerelement ist die Genauigkeit der Anzeige abhängig von der Anzahl der jeweils zur Ergebnisanzeige vorgesehenen möglichen Ergebniswerte jeder Einheit, wodurch sich ein hoher Platzbedarf in dem, die Anzeige nutzenden Bauteil ergeben kann, beispielsweise bei der minutengenauen Zeitdarstellung auf Grund der hohen Anzahl darzustellender Werte zu 60 Minuten einer Stunde. Bei einer linear angeordneten Skala wird die zeitgleich exakte und intuitive Erfassung der Ergebniswerte zudem bei additiven Einheiten mit einer unterschiedlichen Anzahl möglicher Ergebniswerte erschwert, wie dies beispielsweise bei der gleichzeitigen Anzeige zu 12 Monaten, 28 bis 31 Tagen, 12 Stunden 60 Minuten und 60 Sekunden der Fall ist, dies insbesondere bei den üblicherweise dargestellten Zeitspannen wie 12 Monate und 28 bis 31 Tage bzw. 12 Stunden, 60 Minuten und ggf. 60 Sekunden. Erreicht wird eine Reduzierung des Platzbedarfs durch die Begrenzung der Anzahl der dargestellten Zahlenwerte auf ein gemeinsames Vielfaches aller angezeigten Einheiten, beispielsweise auf 12 Zahlenwerte pro Einheit bei einer Zeituhr um somit die 12 Stunden exakt, die Minuten und ggf. die Sekunden jedoch nur in Fünferschritten und somit nicht mehr minutengenau anzuzeigen, wie dies beispielsweise aus der Patentanmeldung GB 2275353 bekannt ist. Weitere gleichzeitige Anzeigen schließen sich bei einer Reduzierung auf gemeinsame Vielfältige bei dieser Darstellung jedoch dann aus, wenn zusätzliche Einheiten sich nicht den gewählten Vielfältigen unterordnen lassen, wie beispielsweise die 28 bis 31 Tage zu den 12 Monaten eines Jahres bei einer gleichzeitigen 12 zw. 24 Stundenanzeige.

Aus der Offenlegungsschrift DE 199 23 808 A1 ist eine Reduzierung der auf der Skala dazustellenden möglichen Ergebniswerte mittels einer einfach sortierte Mengendarstellung bekannt, die mehrstellige Ergebnisanzeigen einer Einheit in jeweils getrennten Skalen mit maximal 10 möglichen Ergebniswerten für die Ziffern 0 -9 pro anzuzeigender Zahlenstelle darstellt. Der Ergebniswert 23 wird beispielsweise durch die Kenntlichmachung des, die Zahl "2" repräsentierenden Symbols auf der ersten Skala und die Zahl "3" durch Kenntlichmachung des, die Zahl "3" repräsentierenden Symbols auf der zweiten Skala angezeigt. Bei dieser Art der Anzeige wird die Anzahl der darzustellenden möglichen Ergebniswerte auf einer Skala reduziert, jedoch die Anzahl der notwendigen Skalen erhöht. Dadurch ist eine intuitive Ergebniswahrnehmung schon bei einer darzustellenden Einheiten mit mehr als 9 möglichen Ergebniswerten pro Einheit nicht mehr möglich, da sodann bereits die einzelnen Zahlenstellen der anzuzeigenden Ergebniswerte ergebnisabhängig räumlich getrennt dargestellt werden. Der benötigte Platzbedarf für jede darzustellende Skala einer jeden Einheit erhöht sich dadurch beispielsweise gegenüber einer analogen Uhr mit kreisrunder Skalenanordnung.

Weiterhin bekannt ist die Ausformung der vorbenannten Anzeigen durch eine kumulative Ergebnisanzeige mittels Balken- bzw. Kuchendiagrammen, wie diese beispielsweise in der Elektronikindustrie zur Darstellung der, die Tonwerte bestimmenden Einheiten wie Bass, Höhen, Lautstärke etc in beispielsweise HiFi-Geräten Verwendung finden. Der jeweils gültige Ergebniswert einer Einheit wird dabei durch den, durch die kumulative Bewegung erkennbare Leserichtung jeweilig feststellbaren Endpunkt der Diagrammdarstellung auf einer sichtbar angezeigten Skala möglicher Ergebniswerte dargestellt. Diese üblicherweise elektronisch gesteuerten Anzeigen sind nach der vorliegenden Erfmdung dynamische Anzeigen, da die Ergebniswerte mittels der beschriebenen Lageveränderung dargestellt werden. Diese Art der Anzeige ermöglicht beispielsweise im Vergleich zu einer analogen Zeigeruhr keine platzsparende Darstellung, da zur Gewährleistung der Eindeutigkeit der Anzeige jede darzustellende Einheit in einer gesonderten Skala darzustellen ist. Die Vorteile dieser Anzeige liegen in dem hohen Grad der intuitiven Ergebnisverfolgung insbesondere sich schnelländernder Ergebniswerte wie dies beispielsweise bei Tonwerten der Musik der Fall ist.

Aus der Patentschrift DE 295 04 124 U1 ist eine dynamische Zeitdarstellung für Stunden und Minuten bekannt, bei der für jede anzuzeigenden Stunde jeweils eine gesonderte Minutenskala vorgesehen ist, auf der die möglichen Minutenwerte dieser Stunde mittels Balkendiagramm bzw. Leuchtdiodenband, in jedem Fall aber mittels einer gesonderten dynamischen Anzeige dargestellt wird. Die Minutenskalen werden entsprechend einer logischen, die Anzahl der Stunden repräsentierenden Anordnung dargestellt. Der Wert der Stunde wird bei dieser Anzeige nicht gesondert durch Ziffern oder Symbole angezeigt, sondern ergibt sich aus der Position der Minutenskala auf der jeweils der Ergebniswert der Minute angezeigt wird. Diese Art der Anzeige ist durch die Lageveränderung des Ergebniswerts sowohl der Stunde als auch der Minute nach der vorliegenden Erfindung eine dynamische und zeitgleich intuitive sowie, abhängig vom Detaillierungsgrad der Skala exakte Anzeige. Werden mehr als zwei Einheiten dargestellt ist der Ergebniswert auf Grund der sich dann gegebenen räumlichen Trennung der Einzelwerte nicht mehr zeitgleich exakt und intuitiv wahrnehmbar. In jedem Fall benötigt diese Art der Anzeige einen hohen Platzbedarf in Bauteilen, da beispielsweise für die minutengenaue Zeitanzeige von beispielsweise 12 Stunden die 60 möglichen Ergebniswerte für die Minute auf 12 gesonderten Skalen darzustellen sind.

Digitale Anzeigen wie sie beispielsweise von zeitanzeigenden Armbanduhren bekannt sind, sind nach der vorstehenden Definition keine dynamischen Anzeigen. Zum Verständnis der vorliegenden Erfmdung sind die Eigenschaften der digitalen Anzeige jedoch wesentlich. Die Ergebnisdarstellung digitaler Anzeigen erfolgt ausschließlich über numerisch dargestellte Zahlenwerte ohne eine Skala möglicherer Ergebniswerte und damit ohne eine ergebnisabhängige Lageveränderung der Anzeigeelemente. Digitale Anzeigen ermöglichen daher kein intuitives Erfassen der Ergebniswerte. Der Anwendungsvorteil der digitalen Darstellung liegt in der jederzeit numerisch exakten Ergebnisanzeige sowie dem geringen Platzbedarf beispielsweise im Vergleich zu einer analogen Zeigeruhr zur Darstellung der numerischen Ergebniswerte. Die Genauigkeit der digitalen Darstellung resultiert allein aus den jeweils dargestellten Zahlenwerten einer bzw. mehrerer Einheiten. Digitale Darstellungen von einander additiv abhängiger Einheiten bieten im Gegensatz zu analogen Darstellungen bei der Ergebnisdarstellung daher keine wahrnehmbaren Rückschlüsse auf nicht dargestellte, jeweils niedrigere Einheiten, wie dies beispielsweise aus der digitalen Zeitdarstellung in Digitaluhren bekannt ist, bei der der angezeigte Zahlenwert der Stunde keine Rückschlüsse auf den nicht angezeigten Wert der Minute zulässt.

Aus dem Markt sowie u.a. aus der Patentanmeldung US 4204399 sind Kombinationen aus den vorbeschriebenen analogen und digitalen Anzeigen insbesondere zur Darstellung der Zeit und damit additiver Einheiten bekannt, die eine bzw. mehrere Einheiten analog, andere bzw. mehrere andere Einheiten zeitgleich digital in einem feststehenden Sichtfenster zur Darstellung der numerischen Zahlenwerte dieser Einheit bzw. Einheiten anzeigen. Die Erfassung des Gesamtergebniswerts erfolgt durch die gedankliche Zusammenführung der analog bzw. digital angezeigten Einzelergebnissen. Der Vorzug der gewählten Anzeigearten kommt dabei in der jeweils so dargestellten Einzeleinheit zum Tragen. Durch die bislang bekannte Kombination der analogen und digitalen Anzeige zur Darstellung eines gemeinsamen Ergebniswertes ist eine zeitgleiche intuitive sowie exakte Anzeige aller angezeigten Einheiten "auf einen Blick" nicht gegeben, da die analog und damit durch ergebnisabhängige Lageveränderung angezeigten Ergebniswerte in jedem Fall in räumlicher Distanz zum feststehenden Sichtfenster der digitalen Anzeige steht.

Aus der Mobilfunkindustrie ist zudem die Kombination aus analogen bzw. digitalen Messwertdarstellungen und die Informationsdarstellung von auch langen und wechselnden Ziffern- bzw. Symbol- bzw. Buchstabenfolgen auf den bekannten elektronisch gesteuerter Displays mittels der bekannten Technik zur drahtlosen Fernübertragung von Signalen bekannt, wie dies üblicherweise bei den mobilen Kommunikationssystemen, beispielsweise mobilen Telefongeräten, der Fall ist.

Die Aufgabe der vorliegenden Erfmdung besteht darin, eine dynamische Anzeige quantitativer Werte korrelierender Einheiten und darauf bezogene Informationen zu entwickeln, die sowohl eine jederzeitig exakte als auch intuitiv wahrnehmbare als auch in direkter räumlicher Nähe zueinander und damit "auf einen Blick" ablesbare Ergebnisdarstellung mehrerer Einheiten und darauf bezogene Informationen mit zugleich raumsparender Wirkung ermöglicht.

Diese Aufgabe wird erfindungsgemäß durch eine neuartige Kombination der bekannten Anzeigearten gelöst, indem der Platzbedarf für eine der darzustellenden Einheiten dadurch entfällt, dass der Wert der Einheit 1 mittels der bekannten Möglichkeiten zur elektronisch bzw. mechanisch gesteuerten Darstellung des ergebnisbestimmenden Zahlenwertes mittels Ziffern bzw. Symbolen in einem Sichtfenster erfolgt, die Zahlenreihe der Einheit 2 durch die logische Anordnung einer bestimmten, die Gesamtheit der möglichen Ergebniswerte der Einheit 2 darstellenden Anzahl von wahrnehmbaren Sichtfenstern repräsentiert wird, deren ergebnisbestimmender Zahlenwert dadurch dynamisch angezeigt wird, dass der Zahlenwert der Einheit 1 ergebnisabhängig in jeweils dem Sichtfenster angezeigt wird das dem darzustellenden numerischen Zahlenwert der Einheit 2 entspricht, wodurch die so angezeigte Einheit in ihrer dynamischen Entwicklung gleichermaßen exakt als auch intuitiv im Gesamtkontext der möglichen Ergebniswerte wahrnehmbar ist. Die Zahlenwerte weiterer Einheiten bzw. weitere Informationen werden erfindungsgemäß in jeweils dem Sichtfenster gleicher numerischer Position innerhalb einer zusätzlichen Anordnung von Sichtfenstern in selber Anzahl und gleicher Ausrichtung wie die der Einheit 1 sowie in räumlicher Nähe zu dieser dargestellt.

Die vorliegende Erfmdung ermöglicht somit die jederzeitig numerisch exakte und in direkter räumlicher Nahe zueinander dargestellte Ergebnisanzeige beliebig vieler Einheiten und Informationen deren Ergebniswerte dadurch "auf einen Blick" erfasst werden und in jedem Fall den Platzbedarf zur Anzeige einer Einheit einsparenden Darstellung in Bauteilen. Erfindungsgemäß wird eine der dargestellten Einheiten durch deren ergebnisabhängige Lageveränderung im Gesamtkontext ihrer möglichen Ergebniswerte dynamisch und ebenfalls exakt dargestellt, wodurch der Ergebniswert dieser Einheit intuitiv wahrnehmbar ist. Nach der vorliegenden Erfindung kann die dergestalt dynamisch angezeigte Einheit frei gewählt werden. Die vorliegende Erfindung ermöglicht bei der Anzeige additiver Einheiten eine intuitive Erfassung des Gesamtergebniswertes, wenn die Einheit dynamisch zur Anzeige gebracht wird, die den größten bzw. wichtigsten Anteil am Ergebniswert hat. Durch die vorliegende Erfindung können damit nicht nur Messwerte platzsparend und dynamisch, sondern auch zeitgleich sowie in direkter räumlicher Nähe und damit "auf einen Blick" erfassbar, ergebnisabhängige Informationen zur Anzeige gebracht werden.

Der raumsparende Effekt der vorliegenden Erfmdung ist direkt proportional zu der Anzahl der angezeigten Gruppierungen korrelierender Einheiten, da mit jeder dargestellten Gruppierung der Platzbedarf zur Darstellung einer Einheit eingespart wird. Wird beispielsweise die Tageszeit und das Datum in gesonderten Gruppierungen dargestellt so wird der Platzbedarf für eine der darzustellenden Einheiten Stunde - Minute - Sekunde sowie einer der darzustellenden Einheiten Jahr - Monat - Tag eingespart.

Vorteilhafte Ausgestaltungen der Erfindung sind in den Unteransprüchen gekennzeichnet.

Vorteilhaft hat sich bei der Darstellung mehrerer Ergebnisgruppierungen durch die Wahl eines gemeinsamen Vielfachen der möglichen Ergebniswerte der durch die Anzahl der Sichtfenster dynamisch darzustellenden Einheiten erwiesen. Bei der Verwendung von beispielsweise 12 Sichtfenstern können die 12 Stunden dynamisch, die 60 Minuten und 60 Sekunden numerisch und in einer gesonderten Gruppierung die 12 Monate dynamisch und der Tag und das Jahr und der Wochentag numerisch exakt angezeigt werden.

Zur Steigerung der schnellen intuitiven Ergebnisfeststellung der angezeigten Zahlenwerte hat es sich als vorteilhaft herausgestellt die Sichtfenster in ihrer logischen Anordnung dergestalt zu gruppieren, dass sie beispielsweise bei der Zeitdarstellung entsprechend der Sehgewohnheit einer analogen Zeituhr zur "Viertelstundenunterteilung" bei 12 Sichtfenstern in jeweils 4 Gruppen zu je drei Sichtfenstern erkennbar zusammengefasst sind, jedoch die logische Anordnung aller Sichtfenster zueinander erhalten bleibt.

Erfindungsgemäß wird beispielsweise bei einer Zeitdarstellung die Tageszeit eindeutig und abhängig von der Ausformung auch ausreichend exakt dargestellt, indem beispielsweise der Zahlenwert der Stunde im Sichtfenster der anzugebenden Minute angezeigt wird, wodurch bei 12 Sichtfenstern eine fünfminutengenaue bei 4 Sichtfenster eine viertelstundengenaue Zeitanzeige mit dynamischer Darstellung der Einheit "Minute" angezeigt wird.

Zur zusätzlichen Platzeinsparung hat sich die Möglichkeit zum wahlweisen Wechsel der jeweils zur Anzeige zu bringenden Einheiten und Informationen innerhalb einer Gruppierung korrelierender Einheiten und Informationen als vorteilhaft erwiesen bzw. auch verschiedener Gruppierungen mittels den bekannten technischen Möglichkeiten zur wechselnden Anzeige von Zahlen bzw. Buchstaben bzw. Symbolen in ein und der selben Reihe von Sichtfenstern erwiesen, dies zumindest dann wenn die Anzahl der Sichtfenster einem gemeinsamen Vielfachen zumindest einer Einheit aus jeder Gruppierung entspricht.

Bewährt hat sich bei der Zeitanzeige mit 12 Sichtfenstern eine Terminfunktion für 12 Monate, eine Wecker- bzw. Alarmfunktion für die Tageszeit, sowie eine exakte Stoppuhr bis 12 Minuten, indem beispielsweise der Zahlenwert der Sekunden im Sichtfenster der jeweiligen 1. bis 12. Minute angezeigt wird.

Zur schnellen und eindeutigen Erfassung der jeweils angezeigten Einheiten und Informationen sieht die Erfindung insbesondere bei der Verwendung von bekannten elektronischen Displays einen wahrnehmbaren Wechsel der Darstellung der angegebenen Werte mittels Änderung des Schriftbildes, der Schrift- bzw. Hintergrundfarbe oder entsprechende Zusatzsymbole vor, bzw. ein gesondertes Sichtfenster zur Anzeige der jeweils dargestellten Einheiten. So hat es sich als vorteilhaft erwiesen beispielsweise bei der Darstellung der Minuten im Sichtfenster arabische Zahlen zu verwenden, während die Darstellung der Stunden durch römische Zahlen bzw. durch die Darstellung des Zahlenwertes in Schreibschrift erfolgt, bzw. die Darstellung mittels bekannter elektronische Einstellmöglichkeiten individuell bzw. kulturkreisbezogen verändert werden kann.

Die vorliegende Erfmdung nutzt die Lesegewohnheiten der verschiedenen Kulturkreise indem die angezeigten Ergebniswerte jeweils entsprechend der Leserichtung des Kulturkreises angezeigt werden, in dem das Bauteil mit der erfindungsgemäßen Darstellung vornehmlich zum Einsatz kommt. So hat es sich als vorteilhaft herausgestellt beispielsweise bei einer horizontalen Ausrichtung der Sichtfenster in den Ländern der westlichen Hemisphäre den niedrigsten anzuzeigenden Zahlenwert einer Zahlenreihe "links" bzw. bei einer vertikalen Ausrichtung "unten", in arabischen Ländern bei einer horizontalen Ausrichtung "rechts" und in asiatischen Ländern bei einer vertikalen Ausrichtung "oben" anzuordnen.

Zur Gewährleistung einer jederzeit international eindeutig verständlichen Angabe sieht die Erfmdung die Angabe der Leserichtung durch ein Symbol, beispielsweise einen Pfeil vor, bzw. eine Einstellfunktion nach der die Leserichtung entsprechend den Erfordernissen des jeweiligen Kulturkreises mittels der bekannten elektronischen bzw. mechanischen Einstellmöglichkeiten ausgerichtet wird.

Die erfindungsgemäße Darstellung eignet sich durch die wahlweise aber stets platzsparende Anzahl der Anzeigeelemente besonders auch zur Integration ihrer anzeigenden Funktionen in Schmuckkörpern aller Art. Beispielsweise sind "schmuckvoll" verzierte bzw. künstlerisch gestaltete Uhren bekannt, bei deren Erscheinungsbild jedoch stets die Uhrfunktion im Vordergrund steht. Mit der erfindungsgemäßen Darstellung können Schmuckgegenstände beispielsweise mit einer zeitanzeigenden Funktion ausgestattet werden und dennoch gleichzeitig das bestimmende Erscheinungsbild des Schmuckgegenstands erhalten werden. Bewährt hat sich dabei die künstlerische Gestaltung der Anzeigeelemente ebenso wie die auf die Anzeige abgestimmte Anordnung von Schmuckmaterialien wie beispielsweise Brillianten bzw. Strass bzw. anderweitige Materialien die sich zur Schmuckherstellung eignen. Die mit einer Reduktion der Sichtfenster einhergehende "Ungenauigkeit" beispielsweise einer viertelstundengenauen Zeitanzeige bei der Verwendung von 4 Sichtfenstern ist erfindungsgemäß gewünscht um dadurch beispielsweise das "laissez-faire" Image des Trägers bzw. der Anwendung selbst zu unterstützten.

Bewährt hat sich die Möglichkeit zur anwendungsabhängigen Darstellungen von individuellen Einheiten bzw. Informationen in den Sichtfenstern, die auch mittels der bekannten technischen Lösungen zur Fernübertragung ohne unmittelbaren Kontakt zum, die Darstellung anzeigenden Bauteil steuerbar eingestellt bzw. verändert werden können. Als vorteilhaft hat sich am Beispiel der Zeitanzeige die Unterstützung von Therapiemaßnahmen bzw. von Wartungsmaßnahmen bei Maschinen und dergleichen durch die Angabe von zeitabhängigen Maßnahmen-, Prüf- oder Zyklusangaben mit beispielsweise wahlweiser Erinnerungs- bzw. Warnfunktion bzw. Informationsanzeige erwiesen.

Weitere vorteilhafte Ausgestaltungen der Erfindung sind den Unteransprüchen zu entnehmen.

Die Erfmdung wird nachfolgend anhand der in der Zeichnung dargestellten Ausführungsbeispiele näher erläutert.

In der Zeichnung zeigen:
- Fig. 1: eine Anordnung von einer Reihe zu je 6 Sichtfenstern zur Darstellung von insgesamt 2 Einheiten.
- Fig.2 a: eine Anordnung von 2 Reihen zu je 6 Sichtfenstern zur Darstellung von 3 Einheiten.

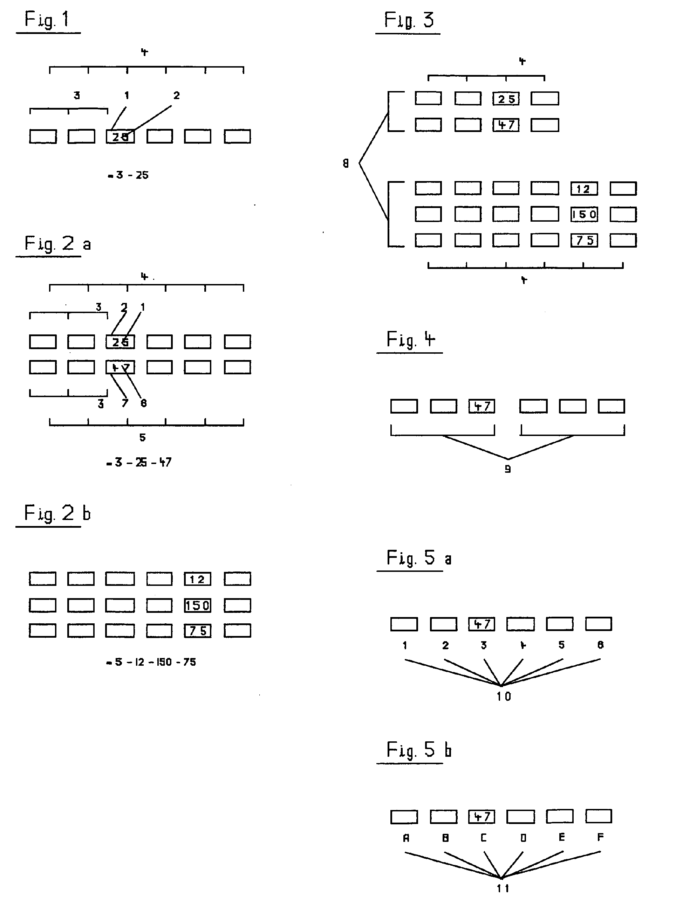

- Fig.2 b: eine Anordnung von 3 Reihen zu je 6 Sichtfenstern zur Darstellung von 4 Einheiten.
- Fig. 3: eine Anordnung von zwei Einheiten- bzw. Ergebnisgruppierungen , wobei alle Einheiten pro Gruppierung mit deren jeweiligem Ergebniswert angezeigt sind.

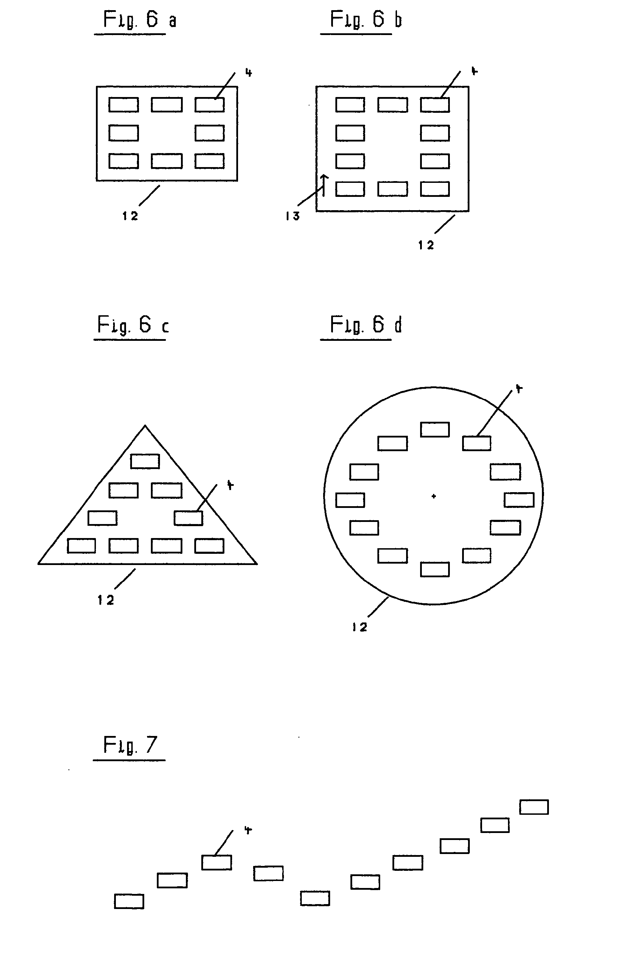

- Fig. 4: eine Anordnung von 6 Sichtfenster in je zwei Untergruppen zu 3 Sichtfenstern.
- Fig. 5 a: eine Anordnung von 6 Sichtfenster, wobei die numerische Position der Sichtfenster zusätzlich durch feststehende Zahlen angezeigt wird.
- Fig. 5 b: eine Anordnung von 6 Sichtfenster, wobei die numerische Position der Sichtfenster zusätzlich durch feststehende Buchstaben angezeigt wird.
- Fig. 6 a: eine geometrische Anordnung von 8 Sichtfenstern in der Form eines Rechtecks.
- Fig. 6 b: eine geometrische Anordnung von 10 Sichtfenstern in der Form eines Quadrats mit Angabe des Beginns und der Leserichtung mittels der Anzeige durch ein entsprechendes Symbol.
- Fig. 6 c: eine geometrische Anordnung von 9 Sichtfenstern in der Form eines Dreiecks.
- Fig. 6 d: eine geometrische Anordnung von 12 Sichtfenstern in der Form eines Kreises.
- Fig. 7: eine Anordnung von 10 Sichtfenstern in einer freien Form.

In **Fig.1** wird eine Reihe zu je 6 Sichtfenstern (4) zur Darstellung von insgesamt 2 Einheiten mit einem angezeigten Ergebnis von "3:25" dadurch dargestellt, dass der Zahlenwert der einen Einheit mit "25" (2) und der Zahlenwert der anderen Einheit mit "3" angezeigt ist, indem der Zahlenwert "25" in dem Sichtfenster (1) bei einer Leserichtung von rechts angezeigt ist, das auf der Position "3" (3) der hierarchischen Anordnung von Sichtfenstern steht.

In **Fig. 2a** wird eine Anordnung von 2 Reihen zu je 6 Sichtfenstern (4,5) zur Darstellung von 3 Einheiten mit einem angezeigten Ergebnis von "3:25:47" dadurch dargestellt, dass die Zahlenwerte zweier Einheiten (1,6) mit "25" und "47" jeweils in einer gesonderten Reihe von Sichtfenstern angezeigt wird und der Zahlenwert der anderen Einheit mit "3" dadurch angezeigt ist, dass die Zahlenwerte "25" und "47" (1,6) jeweils in dem 3. Sichtfenster (2,7) bei einer Leserichtung von rechts angezeigt sind.

In **Fig. 2b** wird eine Anordnung von 3 Reihen zu je 6 Sichtfenstern zur Darstellung von 4 Einheiten mit einem angezeigten Ergebnis von "5:12:150:75" dadurch dargestellt, dass die Zahlenwerte dreier Einheiten "12","150" und "75" jeweils in einer gesonderten Reihe von Sichtfenstern angezeigt wird und der Zahlenwert der anderen Einheit mit "5" dadurch angezeigt ist, dass die Zahlenwerte "12","150 und "75 jeweils in dem 5. Sichtfenster bei einer Leserichtung von rechts angezeigt sind.

In **Fig. 3** wird eine Anordnung von zwei unabhängigen Einheiten- und Ergebnisgruppierungen ( 8) dargestellt, wobei die in der oberen Reihe dargestellten 3 Einheiten mit einem Ergebnis von "3:25:47", die unteren Reihe dargestellten 4 Einheiten mit einem Ergebnis von "5:12:150:75" anzeigt.

**Fig. 4** zeigt eine Anordnung von 6 Sichtfenster, die zu je zwei Untergruppen (9) zu je 3 Sichtfenstern zusammengefasst sind, um so die intuitive Wahrnehmung der durch die Position des Sichtfensters angezeigten Einheit zu verstärken..

In **Fig. 5a** ist die numerische Position der Sichtfenster zusätzlich durch feststehende Zahlen (10) zur schnellen und sichern Wahrnehmung des dadurch angezeigten zahlenwertes gezeigt.

In **Fig. 5b** ist die numerische Position der Sichtfenster zusätzlich durch Buchstaben ( 11 ) zur schnellen und sichern Wahrnehmung des dadurch angezeigten Zahlenwertes gezeigt.

**Fig. 6a** wird die beispielsweise Anordnung von 8 Sichtfenstern (4) in der geometrischen Form eines Rechtecks innerhalb eines Gehäuses (12) gezeigt.

**Fig. 6b** wird die beispielsweise Anordnung von 10 Sichtfenstern (4) in der geometrischen Form eines Quadrats innerhalb eines Gehäuses (12) gezeigt, wobei die Leserichtung und der Ursprungspunkt durch ein Symbol, wie den dargestellten Pfeil (13) angezeigt wird.

**Fig. 6c** wird die beispielsweise Anordnung von 9 Sichtfenstern (4) in der geometrischen Form eines Dreiecks gezeigt innerhalb eines Gehäuses (12).

**Fig. 6d** wird die beispielsweise Anordnung von 12 Sichtfenstern (4) in der geometrischen Form eines Kreises innerhalb eines Gehäuses (12) gezeigt.

**Fig. 7** wird die beispielsweise Anordnung von 10 Sichtfenstern (4) in einer freien nicht geometrischen Form innerhalb eines Gehäuses (12) gezeigt.

## Patentansprüche

1. Dynamische Anzeige quantitativer Werte korrelierender Einheiten und darauf bezogene Informationen zur platzsparenden Darstellung in Bauteilen **dadurch gekennzeichnet, dass** bei einer Gruppierung von zumindest zwei korrelierenden Einheiten das jeweilige Ergebnis exakt und dynamisch angezeigt wird, indem der jeweilige ergebnisbestimmende Wert (1) einer Einheit mittels der bekannten Möglichkeiten zur elektronisch bzw. mechanisch gesteuerten Darstellung von Ziffern bzw. Buchstaben bzw. logischen Symbolen regelmäßig in jeweils dem Sichtfenster (2) numerisch exakt angezeigt wird das auf Grund seiner numerisch bestimmten und als solchen wahrnehmbaren Position (3) innerhalb einer hierarchischen Anordnung von einer, durch die möglichen Ergebniswerte der zweiten anzuzeigenden Einheit bestimmten, gleichbleibenden und jederzeit wahrnehmbaren Anzahl von Sichtfenstern (4) den jeweils ergebnisbestimmenden Zahlenwert der zweiten Einheit repräsentiert.

2. Dynamische Anzeige nach Anspruch 1, **dadurch gekennzeichnet, dass** für jede weitere darzustellende Einheit innerhalb einer Gruppierung jeweils Sichtfenster (5) in der gleichen Anzahl und gleichen hierarchischen Anordnung räumlich nahe den Sichtfenstern (4) der bereits dargestellten Einheit bzw. Einheiten vorgesehen werden und die Ergebnisdarstellung (6) der jeweils weiteren Einheit regelmäßig jeweils in dem Sichtfenster (7) erfolgt, das die gleiche numerisch bestimmte und wahrnehmbare Position (3) aufweist wie das Sichtfenster in dem der bzw. die bereits dargestellten Ergebniswerte angezeigt werden, sodass die ergebnisbestimmenden Werte aller Einheiten einer Gruppierung auf der selben Position stets gleichzeitig und exakt in räumlicher Nähe zueinander ablesbar sind.

3. Dynamische Anzeige nach Anspruch 2, **dadurch gekennzeichnet, dass** die Anzahl der hierarchisch angeordneten Sichtfenster (4) innerhalb einer Gruppierung dergestalt reduziert wird, dass bei Gruppierungen mit mehr als zwei Einheiten die in den Sichtfenstern angezeigten Einheiten mittels bekannter elektronischer bzw. mechanischer Steuerung wahlweise und daher nicht alle gleichzeitig angezeigt werden, stets jedoch dergestalt, dass das angezeigte Ergebnis eindeutig ist.

4. Dynamische Anzeige nach Anspruch 1 bis 3, **dadurch gekennzeichnet, dass** die Anzahl der Sichtfenster innerhalb einer Gruppierung dergestalt reduziert wird, dass die Sichtfenster in ihrer hierarchischen Anordnung auf ein Vielfaches einer bzw. ein gemeinsames Vielfaches aller angezeigten Einheit reduziert wird, stets jedoch dergestalt, dass eine ausreichend genaue und eindeutige Ergebnisdarstellung erfolgt.

5. Dynamische Anzeige nach Anspruch 1 und 3, **dadurch gekennzeichnet, dass** bei der Anordnung mehrerer Ergebnisgruppierungen (8) jede Gruppierung die zur Anzeige der Einzelergebnisse ihrer Einheiten jeweils erforderliche bzw. gewünschte Anzahl von Sichtfenster (4) aufweist.

6. Dynamische Anzeige nach Anspruch 1 - 5, **dadurch gekennzeichnet, dass** bei der Anordnung mehrerer Ergebnisgruppierungen (8) mit der, zur Eindeutigkeit des dargestellten Ergebnisses gleichen notwendigen Anzahl hierarchisch angeordneter Sichtfenster (4) dergestalt reduziert wird, dass die Ergebniswerte in einer gemeinsamen Anordnung von Sichtfenstern mittels der bekannten elektronischen bzw. mechanischen Steuerungen jeweils wahlweise und nicht gleichzeitig angezeigt werden.

7. Dynamische Anzeige nach Anspruch 1 - 6, **dadurch gekennzeichnet, dass** zur Steigerung der intuitiven Ablesbarkeit der Ergebniswerte die einzelnen Sichtfenster einer Gruppierung innerhalb ihrer hierarchischen Anordnung zu Untergruppen (9) zusammengefasst werden.

8. Dynamische Anzeige nach Anspruch 1 bis 7, **dadurch gekennzeichnet, dass** zur Steigerung der zahlengenauen Ablesbarkeit der Ergebniswerte die jeweils durch ihre hierarchische Anordnung numerisch bestimmte Position der Sichtfenster bzw. nicht numerischen bzw. alphanumerischen Symbole mittels feststehender und damit unveränderlicher numerischer bzw. alphanumerischer Symbole (10) bzw. Buchstaben (11) dargestellt wird.

9. Dynamische Anzeige nach Anspruch 1 bis 8, **dadurch gekennzeichnet, dass** die logische Abfolge der Sichtfenster (4) und damit die Leserichtung des nicht in einem gesonderten Sichtfenster dargestellten Einheit mittels Symbolen (13) angezeigt wird.

10. Dynamische Anzeige nach den Ansprüchen 1 bis 9, **dadurch gekennzeichnet, dass** die Sichtfenster (4) einer bzw. mehrerer Gruppierungen dergestalt angeordnet sind, dass sie in ihrem Erscheinungsbild alleinstehend bzw. zusammenwirkend geometrischen Formen bzw. nicht geometrische und damit freie Formen bilden.

11. Dynamische Anzeige nach Anspruch 1 - 6, **dadurch gekennzeichnet, dass** zur intuitiven Unterscheidung der jeweils angezeigten Einheiten einer Ergebnisgruppierungen bzw. zur Unterscheidung mehrerer Ergebnisgruppierungen die angezeigten Ergebniswerte regelmäßig in unterscheidbaren Ziffern bzw. Symbolen bzw. Buchstaben bzw. Schriftbildern bzw. der Schriftfarben bzw. der Hintergrundfarben dargestellt werden.

12. Dynamische Anzeige nach Anspruch 1 - 6, **dadurch gekennzeichnet, dass** zur Unterscheidung der jeweils angezeigten Einheiten einer Ergebnisgruppierungen bzw. zur Unterscheidung mehrerer Ergebnisgruppierungen mit den Darstellungen der angegebenen Werte im jeweiligen Sichtfenster entsprechende Symbole bzw. Hinweisen auf die jeweils dargestellten Einheiten angezeigt werden.

13. Dynamische Anzeige nach Anspruch 1 - 6, **dadurch gekennzeichnet, dass** zur Unterscheidung der jeweils angezeigten Einheiten einer Ergebnisgruppierungen bzw. zur Unterscheidung mehrerer Ergebnisgruppierungen in einem bzw. mehreren gesonderten Sichtfenstern entsprechende Symbole bzw. Hinweise auf die jeweils dargestellten Einheiten angezeigt werden.

14. Dynamische Anzeige nach Anspruch 1 - 6, **dadurch gekennzeichnet, dass** die logische Abfolge der angezeigten Ergebniswerte in den jeweiligen Sichtfenster (4) und damit die Leserichtung mittels bekannter elektronischer bzw. mechanischer Einstellmechanismen wahlweise eingestellt bzw. verändert werden kann.

15. Dynamische Anzeige nach Anspruch 1 - 6, **dadurch gekennzeichnet, dass** die einzelnen Einheiten bzw. anwendungsindividuelle Einheiten bzw. die Anzeigeabfolge der Einheiten bzw. die jeweilige Ergebnisdarstellung bzw. die Logik der Ergebnisdarstellung innerhalb einer Gruppierung mittels den bekannten technischen Lösungen wahlweise eingestellt bzw. verändert werden kann.

16. Dynamische Anzeige nach Anspruch 1 - 6, **dadurch gekennzeichnet, dass** Informationen in den Sichtfernstern (4) bezogen auf die Ergebnisdarstellung mittels den bekannten technischen Lösungen wahlweise eingestellt bzw. verändert bzw. ein- und ausgeschaltet werden können und mittels den bekannten technischen Lösungen optisch bzw. akustisch wahrnehmbar angezeigt werden.

17. Dynamische Anzeige nach Anspruch 1 - 6, **dadurch gekennzeichnet, dass** die Einstellungen der anzuzeigenden Einheiten bzw. Ergebnisse bzw. Informationen mittels der bekannten technischen Lösungen zur Fernübertragung ohne unmittelbaren Kontakt zum, die Darstellung anzeigenden Bauteil vorgenommen werden kann.
